# DEMANDE DE BREVET EUROPEEN

(11) **EP 1 705 105 A1**
(43) Date de publication de la demande: **27.09.2006**
(21) Numéro de dépôt: 06300270.3
(22) Date de dépôt: 23.03.2006
(51) Int. Cl.: B62D 53/02

(54) **Véhicule articulé à quatre roues motrices**

(30) Priorité: 25.03.2005 FR 0550779
(71) Demandeur: Coeuret, Bernard, 14310 Epinay sur Odon (FR)
(72) Inventeur: Coeuret, Bernard, 14310 Epinay sur Odon (FR)
(74) Mandataire: Herrburger, Pierre

(57) **Abrégé**

Véhicule articulé à quatre roues motrices, comprenant un châssis avant (CH-AV) équipé de roues motrices (1, 3) non directrices, et portant le poste de conduite (2), un châssis arrière (CH-AR) équipé de roues motrices (3) non directrices, recevant la charge, une articulation d'axe vertical (ART-V) entre le châssis avant (CH-AV) et le châssis arrière (CH-AR) constituant une articulation de direction, une articulation d'axe horizontal (ART-H) entre les deux châssis (CH-AV ; CH-AR). Un vérin de direction (4) relie les deux parties de l'articulation de direction (ARV-V) en laissant libre l'articulation horizontale (ART-H). Un circuit hydraulique commande le vérin de direction (4). L'articulation d'axe vertical (ART-V) et l'articulation d'axe horizontal (ART-H) sont portées par une pièce de liaison (PL), l'articulation horizontale (ART-H) étant située à l'avant du châssis arrière (CH-AR) et l'articulation verticale (ART-V) étant située sous le châssis avant (CH-AV).

## Description

### Domaine de l'invention

La présente invention concerne un véhicule articulé à quatre roues motrices, comprenant
- un châssis avant équipé de roues motrices non directrices, et portant le poste de conduite,
- un châssis arrière équipé de roues motrices non directrices, recevant la charge,
- une articulation d'axe vertical entre le châssis avant et le châssis arrière constituant une articulation de direction,
- une articulation d'axe horizontal entre les deux châssis,
- au moins un vérin de direction reliant les deux parties de l'articulation de direction en laissant libre l'articulation horizontale ainsi qu'un circuit hydraulique pour commander le vérin de direction.

### Etat de la technique

On connaît déjà différents véhicules articulés à quatre roues motrices et en particulier un véhicule décrit dans le document FR 03 02 767.

### But de la présente invention

La présente invention a pour but de développer un véhicule léger, articulé, du type défini ci-dessus, qui soit d'une construction plus simple et permette un braquage plus efficace sans risque de coincement entre le châssis avant et le châssis arrière.

### Exposé et avantages de l'invention

A cet effet l'invention concerne un véhicule articulé à quatre roues motrices du type défini ci-dessus caractérisé en ce que l'articulation d'axe vertical et l'articulation d'axe horizontal sont portées par une pièce de liaison, l'articulation horizontale étant située à l'avant du châssis arrière et l'articulation verticale étant située sous le châssis avant.

L'articulation d'axe vertical, déportée sous le châssis avant et non pas située dans l'intervalle entre le châssis avant et le châssis arrière, permet à la fois une construction plus simple et avec moins de risque d'accident pour une personne qui se trouverait au niveau de la jonction du châssis avant et du châssis arrière au moment d'une manoeuvre de direction. Une telle manoeuvre peut être nécessaire en marche avant comme en marche arrière, sur une courte distance pour positionner le véhicule, le présenter dans de meilleures conditions pour une opération de chargement ou de déchargement ou de changement d'équipement alors qu'une ou plusieurs personnes participent à l'opération et se trouvent près du véhicule.

La structure et la réalisation du véhicule selon l'invention sont particulièrement simple du fait de la dissociation et du déport de l'axe de rotation vertical qui constitue l'axe de direction, sous le châssis avant ; cet axe vertical constitué par une couronne peut également être utilisé avantageusement pour le passage des conduites hydrauliques entre le groupe hydraulique installé au niveau de la cabine avant et les équipements et accessoires utilisant le circuit hydraulique au niveau du châssis arrière.

La réalisation de l'articulation est également très simple et très robuste du fait de la structure de la pièce de liaison. En effet la pièce de liaison est une pièce plate, pliée à l'équerre en deux branches, une branche verticale remontant devant le châssis arrière et portant l'articulation horizontale, une branche horizontale passant sous le châssis avant et portant l'articulation verticale.

Cette pièce de liaison est très peu encombrante tant au niveau de sa branche verticale portant l'axe d'articulation horizontal qu'au niveau de sa branche horizontale passant sous le châssis avant.

La commande du pivotement du châssis avant par rapport à la pièce de liaison autour de l'axe horizontal se fait de manière très efficace car selon une caractéristique avantageuse la branche horizontale de la pièce de liaison porte au moins une patte pour être reliée aux vérins de direction.

Le vérin unique peut également être complété par un second vérin en position symétrique, les deux vérins de direction étant couplés pour leur commande.

Suivant une autre caractéristique avantageuse, le châssis arrière est formé par un tube de section rectangulaire portant sur chacun de ses côtés, un caisson de roue auquel est fixé le boîtier cylindrique recevant un moteur hydraulique de roue ainsi qu'un caisson muni d'une articulation de benne.

Cette forme de réalisation du châssis est à la fois rigide et légère grâce à sa structure en caisson qui permet également de recevoir différents accessoires et équipements et notamment cette forme de tube peut servir au passage protégé des circuits hydrauliques reliant les moteurs hydrauliques des roues arrières, le ou les vérins de basculement de la benne ou les vérins alimentant des équipements installés à l'arrière tels qu'une grue.

Suivant une autre caractéristique avantageuse, l'articulation horizontale est formée par un axe tubulaire porté par l'organe de liaison et par un manchon recevant l'axe tubulaire et associé au châssis arrière, ce manchon étant muni de deux plaques de montage de section correspondante à la section intérieure du tube formant le châssis arrière pour y être engagées et bloquées.

Cette forme de réalisation de l'articulation utilise avec intérêt la structure particulière du châssis arrière permettant un montage particulièrement rapide par un assemblage de l'articulation horizontale dans l'extrémité du tube du châssis arrière.

Suivant une autre caractéristique avantageuse concernant le châssis arrière, le caisson de roue est fermé sur ses trois côtés, le côté inférieur étant ouvert et le boîtier cylindrique est muni de deux flasques fixés dans le caisson de roue.

Suivant une autre caractéristique avantageuse, le tube du châssis arrière est muni, à l'avant, de deux chapes portant un axe transversal pour l'articulation du vérin de la benne, le vérin étant positionné à côté du tube formant le châssis. Ce montage est une solution simple et efficace pour l'appui du ou des vérins de la benne. Les vérins sont ainsi installés en position protégée à côté du tube du châssis, sous la benne. Leur déploiement ou leur reploiement se font sans que le mouvement ne soit gêné par un accessoire ou élément de châssis qui pourrait se trouver sur leur chemin.

Suivant une autre caractéristique avantageuse, l'articulation verticale est formée par une couronne de rotation interposée entre la branche horizontale de la pièce de liaison et le châssis avant.

Cette articulation verticale en forme de couronne permet une bonne répartition des efforts, un mouvement de rotation en souplesse et surtout l'intérieur de la couronne peut servir au passage des conduites de fluide ou des lignes électriques, d'autant plus que le pivotement du châssis avant autour de l'axe vertical de cette articulation se fait de manière très limitée d'un côté ou de l'autre au maximum suivant l'angle de braquage défini pour le véhicule.

Ainsi et comme indiqué, l'équipement hydraulique du châssis arrière est relié à l'équipement hydraulique du châssis avant par des joints tournants associés à la couronne de rotation formant l'articulation verticale.

De plus, de façon particulièrement avantageuse, l'arrière de la carrosserie de châssis avant a une forme de révolution centrée sur l'axe vertical d'articulation du véhicule.

Globalement les moyens de l'invention permettent de réaliser un véhicule de petite dimension, efficace, léger, souple, susceptible de circuler sur des terrains réputés difficiles ou fragiles pour y transporter des charges ou effectuer des travaux en particulier dans les applications agricoles, horticoles, dans les espaces verts, les jardins publics, ou de petits chantiers de travaux civils ou publics.

### Dessins

La présente invention sera décrite ci-après de manière plus détaillée à l'aide d'un mode de réalisation d'un véhicule léger articulé à quatre roues représenté schématiquement dans les dessins annexés dans lesquels :
- la figure 1 est une vue de dessous du véhicule,
- la figure 2 est une vue en perspective de la pièce de liaison de l'articulation d'axe vertical et de l'articulation d'axe horizontal reliant les deux châssis,
- la figure 3 est une vue en perspective du châssis,
- la figure 4 est une vue en perspective du module de l'axe d'articulation horizontal.

### Description d'un mode de réalisation

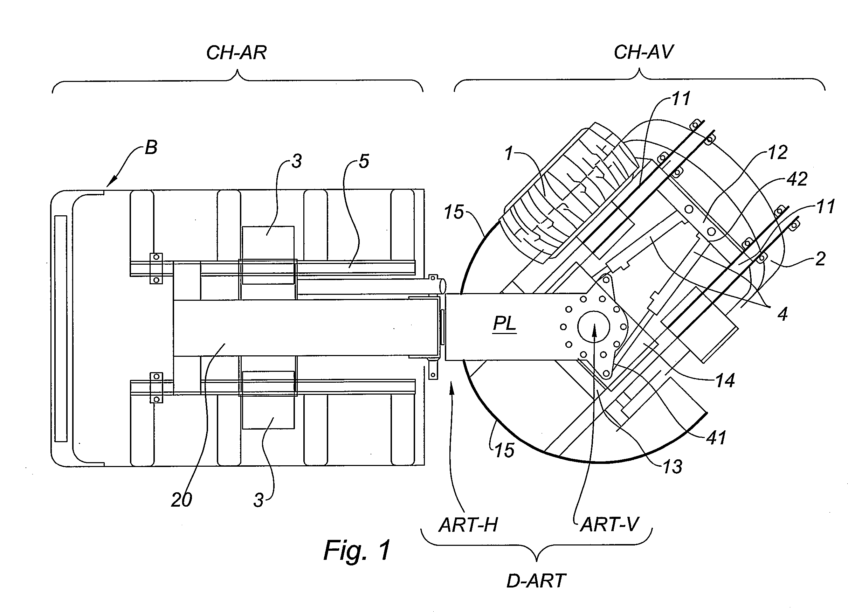

Selon la figure 1, l'invention concerne un véhicule léger articulé à quatre roues motrices. Ce véhicule se compose d'un châssis avant CH-AV équipé de deux roues motrices 1 dont une seule est représentée. Ces roues motrices ne sont pas directrices. Le châssis avant formé de deux longerons 11 et de traverses 12 porte le poste de conduite installé dans une cabine 2 et la plaque 14 portant l'axe d'articulation vertical.

Le véhicule comprend également un châssis arrière CH-AR équipé également de roues motrices non directrices. Ce châssis est destiné à recevoir la charge représentée par une benne B. Les roues motrices ne sont pas représentées. Seuls apparaissent les cylindres 3 recevant les moteurs portant les roues.

Les deux châssis sont reliés par une double articulation D-ART, composée d'une articulation d'axe vertical ART-V entre le châssis avant CH-AV et le châssis arrière CH-AR qui constitue l'articulation de direction et une articulation d'axe horizontal ART-H reliant également les deux châssis.

Cette articulation horizontale ART-H est libre alors que l'articulation de direction d'axe vertical ART-V est commandée par un ou deux vérins de direction 4 reliant un point fixe du châssis avant à une partie de l'articulation d'axe vertical.

Selon le mode de réalisation représenté, les roues motrices sont entraînées par des moteurs individuels constitués ici par des moteurs hydrauliques reliés à un ou plusieurs circuits hydrauliques qui en assurent la commande. Il en est de même du ou des vérins de direction 4 et des vérins de l'équipement portés par le châssis arrière CH-AR tels que par exemple le ou les vérins de relevage 5 de la benne B, ou les vérins de commande d'un accessoire installé sur le châssis arrière tels qu'une grue.

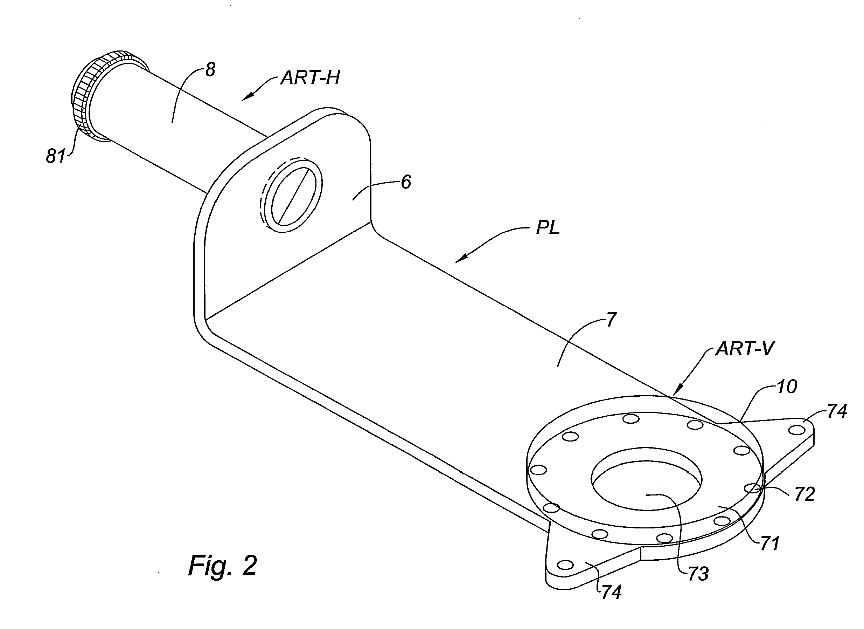

De manière plus détaillée(figure 2), l'ensemble articulé ou articulation double D-ART reliant le châssis avant CH-AV au châssis arrière CH-AR est constitué par une pièce de liaison PL pliée à l'équerre, en deux branches 6, 7. Pour des raisons d'encombrement, cette pièce est plate. L'une des branches 6 est verticale pour remonter devant le châssis arrière CH-AR ; elle porte l'articulation horizontale ART-H. L'autre branche 7 passe sous le châssis avant CH-AV et porte l'articulation verticale ART-V.

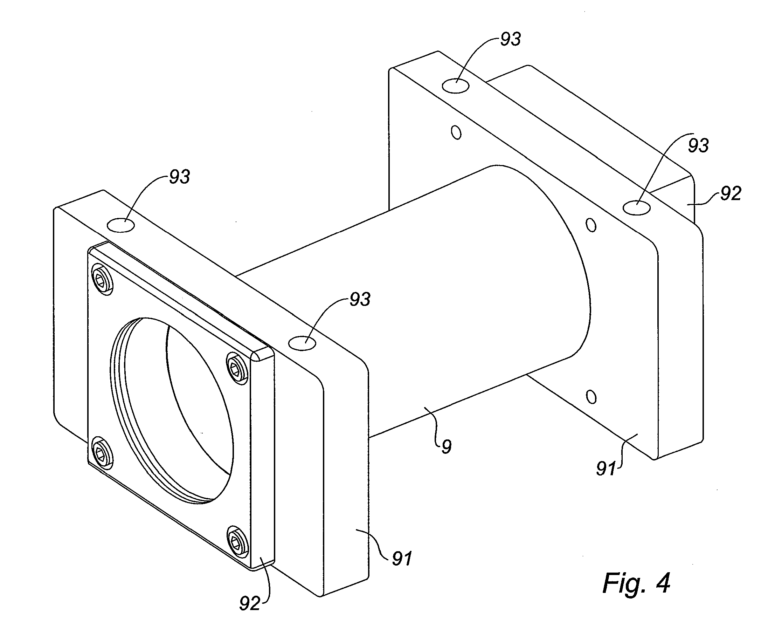

L'articulation d'axe horizontal ART-H est constituée par un manchon tubulaire 8 solidaire de la branche verticale de la pièce de liaison PL et se logeant dans une pièce formant palier 9, également de structure tubulaire comme celle représentée à la figure 4, avec interposition de couronnes de roulement 81 notamment de couronnes à rouleaux. La pièce tubulaire 9 est solidaire du châssis arrière CH-AR.

L'articulation d'axe vertical ART-V est constituée par une couronne de pivotement, plate 10, dont une partie est reliée au châssis avant CH-AV et l'autre est portée par l'extrémité 71 de la branche horizontale 7 de la pièce de liaison PL. La couronne 10 est simplement esquissée. Elle est fixée à l'extrémité 71 de la branche par un ensemble de vis logées dans des perçages 72 entourant un orifice circulaire 73 servant à la traversée des conduites hydrauliques (non représentées). La branche horizontale 7 comporte deux pattes latérales 74 destinées à l'accrochage de l'extrémité 41 respective d'un vérin de direction 4 installé sous le châssis avant CH-AV et dont l'autre extrémité 42 est reliée à la traverse avant 12 du châssis avant. La commande couplée de ces vérins assure le basculement relatif du châssis avant CH-AV par rapport au châssis arrière CH-AR autour de l'axe vertical comme le montre par exemple la position représentée à la figure 1.

Il est à souligner que l'axe d'articulation vertical est éloigné de l'axe d'articulation horizontal et constitue le centre de courbure de la paroi arrière 15 de la carrosserie du châssis avant (figure 1). Cette forme circulaire ou de révolution de la paroi arrière 15 de la carrosserie centrée sur l'axe vertical évite tout risque de pincement lorsque le châssis avant CH-AV pivote par rapport au châssis arrière CH-AR pour un mouvement de braquage.

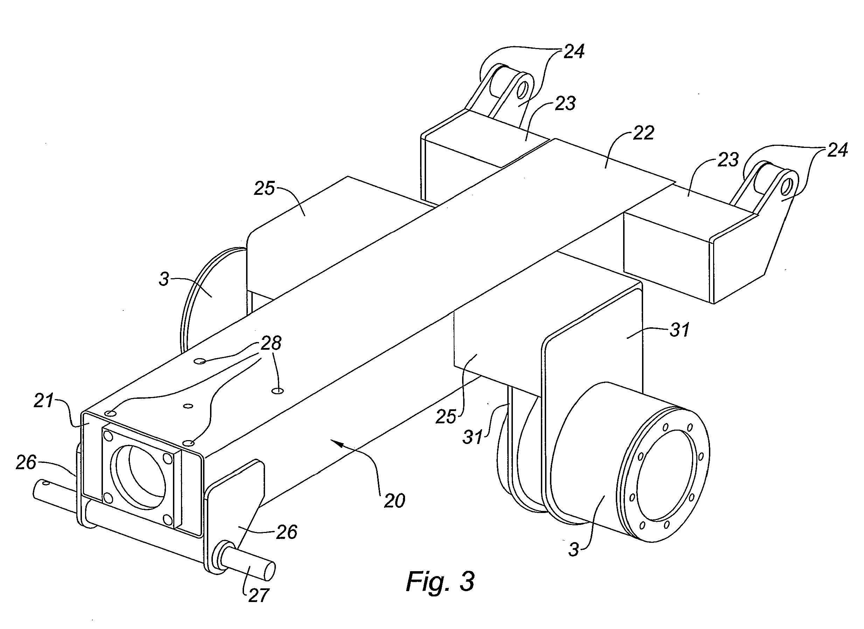

Selon la figure 3, le châssis arrière CH-AR est formé par un tube 20 de section rectangulaire. L'avant 21, ouvert, reçoit la pièce formant le palier de l'articulation horizontale ART-H. A l'arrière 22 le tube porte une traverse formée par deux caissons 23 muni chacun de deux pattes 24 formant le palier de la benne basculante B.

En position intermédiaire, le tube 20 comporte de chaque côté un caisson de roue 25 auquel est fixé un fût cylindrique 3 recevant un moteur hydraulique de roue. Le fût cylindrique 3 est relié à chaque caisson de roue par une double patte soudée 31.

A l'avant, le tube 20 comporte également deux chapes 26 de part et d'autre, recevant un axe 27 auquel se fixe le ou de préférence les deux vérins 5 de basculement de la benne. Un vérin 5 est représenté à la figure 1.

Ce châssis tubulaire CH-AR 20 est une pièce mécano-soudée.

Comme déjà évoqué ci-dessus, le palier de l'axe d'articulation horizontal ART-H, pour sa partie associée au châssis arrière CH-AR, est formé par un tube 9 porté par deux plaques rectangulaires 91 de section correspondant à la section intérieure du tube 20 formant le châssis. L'ensemble composé de ce tube 9 et de ses deux plaques 91 se glisse par l'extrémité avant ouverte 21 du tube 20 du châssis et y est vissé. Les trous de vis 28 apparaissent sur le tube 20 et les taraudages 93, sur le dessus (et le dessous) des plaques 91 dans des positions correspondantes. Dans ces conditions, l'assemblage de l'articulation ART-H au châssis arrière CH-AR se fait simplement en glissant cet ensemble 89, 91 dans le tube 20 et en le bloquant par des vis.

En fait et comme le montre la figure 4, le tube palier porte deux flasques 92 recevant les couronnes de palier 81, (figure 2), et ces deux flasques 92 sont eux-mêmes vissés aux plaques 91 fixées au tube 9 du châssis 20.

L'alimentation hydraulique des équipements du châssis arrière et en particulier des moteurs hydrauliques des roues peut se faire à travers le tube d'articulation horizontal 8 porté par la branche verticale 6 de la pièce de liaison PL pour descendre sous cette pièce de liaison et rejoindre le palier d'axe vertical de l'extrémité avant 71 de la branche horizontale 7 de cette pièce et remonter pour rejoindre un distributeur tournant. Ce distributeur tournant est relié dans la cabine aux différents circuits de commande tels que le circuit d'entraînement hydraulique des roues, le circuit de commande du ou des vérins de basculement de la benne ou de commande de vérins associés à des accessoires installés sur le châssis arrière et non représentés.

## Revendications

1. Véhicule articulé à quatre roues motrices, comprenant
- un châssis avant (CH-AV) équipé de roues motrices non directrices, et portant le poste de conduite,
- un châssis arrière (CH-AR) équipé de roues motrices non directrices, recevant la charge,
- une articulation d'axe vertical (ART-V) entre le châssis avant (CH-AV) et le châssis arrière (CH-AR) constituant une articulation de direction,
- une articulation d'axe horizontal (ART-H) entre les deux châssis (CH-AV ; CH-AR),
- au moins un vérin de direction reliant les deux parties de l'articulation de direction (ARV-V) en laissant libre l'articulation horizontale (ART-H) ainsi qu'un circuit hydraulique pour commander le vérin de direction,
**caractérisé en ce que**
l'articulation d'axe vertical (ART-V) et l'articulation d'axe horizontal (ART-H) sont portées par une pièce de liaison (PL),
l'articulation horizontale (ART-H) étant située à l'avant du châssis arrière (CH-AR) et l'articulation verticale (ART-V) étant située sous le châssis avant (CH-AV).

2. Véhicule articulé selon la revendication 1,
**caractérisé en ce que**
la pièce de liaison (PL) est une pièce plate, pliée à l'équerre en deux branches (6, 7),
- une branche verticale (6) remontant devant le châssis arrière (CH-AR) et portant l'articulation horizontale (ART-H),
- une branche horizontale (7) passant sous le châssis avant (CH-AV) et portant l'articulation verticale (ART-V).

3. Véhicule articulé selon la revendication 2,
**caractérisé en ce que**
la branche horizontale (7) de la pièce de liaison (PL) porte au moins une patte (74) pour être reliée aux vérins de direction (4).

4. Véhicule articulé selon la revendication 1,
**caractérisé en ce que**
le châssis arrière (CH-AR) est formé par un tube de section rectangulaire (20) portant sur chacun de ses côtés, un caisson de roue (25) auquel est fixé le boîtier cylindrique (3) recevant un moteur hydraulique de roue ainsi qu'un caisson muni d'une articulation de benne (23, 24).

5. Véhicule articulé selon les revendications 1 et 4,
**caractérisé en ce que**
l'articulation horizontale (ART-H) est formée par un axe tubulaire (8) porté par l'organe de liaison (6) et par un manchon (9) recevant l'axe tubulaire (8) et associé au châssis arrière (CH-AR), ce manchon (9) étant muni de deux plaques de montage (91) de section correspondante à la section intérieure du tube (20) formant le châssis arrière (CH-AR) pour y être engagées et bloquées (28, 93).

6. Véhicule articulé selon la revendication 4,
**caractérisé en ce que**
le caisson de roue (25) est fermé sur ses trois côtés, le côté inférieur étant ouvert et le boîtier cylindrique (3) est muni de deux flasques (31) fixés dans le caisson de roue (25).

7. Véhicule articulé selon la revendication 4,
**caractérisé en ce que**
le tube (20) du châssis arrière (CH-AR) est muni, à l'avant (21), de deux chapes (26) portant un axe transversal (27) pour l'articulation du vérin (5) de la benne, le vérin étant positionné à côté du tube (20) formant le châssis.

8. Véhicule articulé selon la revendication 2,
**caractérisé en ce que**
l'articulation verticale (ART-V) est formée par une couronne de rotation (10) interposée entre la branche horizontale (7) de la pièce de liaison (PL) et le châssis avant (CH-AV).

9. Véhicule articulé selon les revendications 1 et 8,
**caractérisé en ce que**
l'équipement hydraulique du châssis arrière (CH-AR) est relié à l'équipement hydraulique du châssis avant (CH-AV) par des joints tournants associés à la couronne de rotation (10) formant l'articulation verticale (ART-V).

10. Véhicule articulé selon la revendication 1,
**caractérisé en ce que**
l'arrière (15) de la carrosserie de châssis avant (CH-AV) a une forme de révolution centrée sur l'axe vertical d'articulation du véhicule.
